# EUROPÄISCHE PATENTSCHRIFT

(11) **EP 2 563 833 B1**
(45) Veröffentlichungstag und Bekanntmachung des Hinweises auf die Patenterteilung: **25.02.2015**
(21) Anmeldenummer: 11714995.5
(22) Anmeldetag: 20.04.2011
(51) Int. Cl.: C08G 18/18, C08G 18/48, C08G 18/50, C08G 65/26, C08G 101/00

(54) **VERFAHREN ZUR HERSTELLUNG VON POLYURETHAN-HARTSCHAUMSTOFFEN**
PROCESS FOR PRODUCING RIGID POLYURETHANE FOAMS
PROCÉDÉ DE PRODUCTION DE MOUSSES DE POLYURÉTHANE RIGIDES

(30) Priorität: 26.04.2010 EP 10161044
(43) Veröffentlichungstag der Anmeldung: 06.03.2013
(73) Patentinhaber: BASF SE, 67056 Ludwigshafen (DE)
(72) Erfinder: FRICKE, Marc, 49090 Osnabrück (DE); SCHÜTTE, Markus, 49080 Osnabrück (DE); ZARBAKHSH, Sirus, Hong Kong (CN); KLASSEN, Johann, 32351 Stemwede-Oppendorf (DE)
(86) Internationale Anmeldenummer: PCT/EP2011/056301
(87) Internationale Veröffentlichungsnummer: WO 2011/134856

(56) Entgegenhaltungen:
- EP-A1- 1 923 417
- WO-A1-2005/044889
- DE-A1- 19 502 578
- DE-A1- 19 916 647
- US-A- 3 336 245

## Beschreibung

Gegenstand der Erfindung ist ein Verfahren zur Herstellung von Polyurethan-Hartschaumstoffen durch Umsetzung von Polyisocyanaten mit Verbindungen mit mindestens zwei mit Isocyanatgruppen reaktiven Wasserstoffatomen in Gegenwart von Treibmitteln.

Polyurethan-Hartschaumstoffe sind seit langem bekannt und werden vorwiegend zur Wärme- und Kältedämmung, z. B. in Kühlgeräten, in Warmwasserspeichern, in Fernwärmerohren oder im Bauwesen, beispielsweise in Sandwichelementen, eingesetzt. Eine zusammenfassende Übersicht über die Herstellung und Anwendung von Hartschaumstoffen auf Isocyanatbasis findet sich beispielsweise im Kunststoff-Handbuch, Band 7, Polyurethane, 1. Auflage 1966, herausgegeben von Dr. R. Vieweg und Dr. A. Höchtlen, und 2. Auflage 1983, herausgegeben von Dr. Günter Oertel, und 3. Auflage 1993, herausgegeben von Dr. Günter Oertel, Carl Hanser Verlag, München, Wien.

Als Treibmittel zur Herstellung von Polyurethan-Hartschaumstoffen wurden in der Vergangenheit zumeist Fluorchloralkane (FCKW), vorzugsweise Trichlorfluormethan, eingesetzt. Nachteilig an diesen Treibgasen ist jedoch die Belastung der Umwelt.

Als Nachfolger für die FCKW werden inzwischen zumeist Kohlenwasserstoffe, vorzugsweise Pentane, eingesetzt. So beschreibt EP-A-421 269 die Verwendung von Cyclopentan und/oder Cyclohexan, gegebenenfalls im Gemisch mit anderen Kohlenwasserstoffen, als Treibmittel.

Diese Treibmittel unterscheiden sich jedoch in verschiedener Hinsicht von den halogenierten Treibmitteln. So sind sie mit den übrigen Bestandteilen der PolyurethanSysteme schlechter verträglich. Dies führt zu einer raschen Entmischung der Treibmittel enthaltenden Komponenten.

Ein weiteres wesentliches Kriterium für die Verarbeitung von Polyurethan-Hartschaumstoffen ist die Viskosität der flüssigen Einsatzstoffe. Diese hat unmittelbaren Einfluss auf das Fließverhalten der Ausgangskomponenten. Außerdem sind sehr hochviskose Komponenten schlecht pumpfähig.

Unter Fließfähigkeit des Schaums wird hierbei das Fließverhalten der reagierenden Mischung aus Polyisocyanat und der Verbindung mit mindestens zwei mit Isocyanatgruppen reaktiven Wasserstoffatomen verstanden. Die Bestimmung der Fließfähigkeit erfolgt zumeist, indem die Weglänge bestimmt wird, welche eine definierte Menge der reagierenden Mischung zurücklegt. Dies kann erfolgen, indem die Reaktionsmischung in einen flexiblen Schlauch aus Kunststoff-Folie, im folgenden als Schlauchtest bezeichnet, oder in eine normierte längliche Form, beispielsweise eine sogenannte Boschlanze, eingebracht und die Länge des so entstandenen Formkörpers bestimmt wird. Die Fließfähigkeit spielt beim Ausschäumen von Hohlräumen, wie es insbesondere bei der Herstellung von Kühlgeräten erfolgt, eine große Rolle.

Eine häufig eingesetzte Einsatzkomponente für die Herstellung von Polyurethan-Hartschaumstoffen sind Polyetheralkohole, die durch Anlagerung von Alkylenoxiden an aromatische Amine hergestellt werden. Diese Polyetheralkohole verringern die Wärmeleitfähigkeit der Schaumstoffe und können die Verträglichkeit mit den Treibmitteln verbessern. Als aromatische Amine werden vorzugsweise Methylendianilin (MDA), das zumeist im Gemisch mit seinen höherkernigen Kondensationsprodukten vorliegt (PMDA) und Toluylendiamin (TDA) eingesetzt. Bei TDA haben die ortho-Isomere, häufig auch als vicinales TDA bezeichnet, die größte technische Bedeutung.

Die unter Verwendung von aromatischen Aminen hergestellten Polyetheralkohole weisen häufig eine sehr hohe Viskosität auf.

Um diesen Nachteil zu beheben und die Viskositäten solcher Polyole niedrig zu halten, ist es daher üblich, die Hydroxylzahl solcher Polyole nicht zu hoch zu wählen. Vorzugsweise liegen die Hydroxylzahlen der Polyole unter 400 mg KOH/g.

Eine weitere Möglichkeit der Verringerung der Viskosität besteht in der Mitverwendung von Ethylenoxid zum Aufbau der Polyetherkette. Damit kann die Hydroxylzahl der Polyole erhöht werden.

US 4209609 beschreibt die Herstellung von TDA-Polyolen im Hydroxylzahlbereich von 400-630 mg KOH/g, die in der Weise hergestellt werden, dass TDA zuerst mit ca. 4 mol Ethylenoxid und anschließend mit Propylenoxid umgesetzt wird. Diese TDA-Polyole zeigen einige Vorteile (z.B. niedrige Wärmeleitzahl). Weitere Herstellverfahren sind beschrieben in DE 4232970 A1 und US 4562290. Die aminkatalysierte Herstellung von TDA-Polyolen, welche zuerst mit 2 bis 5 mol Ethylenoxid und dann mit Propylenoxid versetzt werden, ist in EP 0318784 B1 und DE 3740634 beschrieben.

In EP 0318784 B1 und DE 3740634 wird die Herstellung von Polyolen auf Basis von TDA beschrieben, bei der zuerst an das TDA zunächst 2-5 mol Ethylenoxid und danach Propylenoxid angelagert werden, wobei als Katalysatoren Amine eingesetzt werden.

Durch das Ethylenoxid in der Kette wird zwar die Viskosität der Polyetheralkole verringert, die Verträglichkeit mit den als Treibmittel eingesetzten Kohlenwasserstoffen jedoch verschlechtert. Außerdem führt das Ethylenoxid in der Kette zu einer Erhöhung der Hydrophilie.

US 4391728 beschreibt die Herstellung von niederviskosen TDA-Polyolen mittels KOH Katalyse und bei Temperaturen über 140 °C. Als Alkylenoxid wird ausschließlich Propylenoxid eingesetzt. Für die Umsetzung sind mindestens 0,8 Gew.-% Alkalimetallhydroxid als Katalysator notwendig. Durch den Einsatz von so hohen Mengen an Alkalimetallhydroxiden als Katalysator ist eine aufwendige Aufarbeitung notwendig. Außerdem kann es durch die hohe Katalyse dazu kommen, dass nicht alle Wasserstoffatome des TDA abreagieren, was zu Problemen bei der Herstellung der Schaumstoffe führen kann.

Es war die Aufgabe der vorliegenden Erfindung, ein Verfahren zur Herstellung von Polyurethan-Hartschaumstoffen unter Verwendung von Polyolen auf Basis von aromatischen Aminen, insbesondere TDA, bereitzustellen, die eine gute Verträglichkeit mit den als Treibmittel verwendeten Kohlenwasserstoffen, eine niedrige Viskosität der flüssigen Ausgangskomponenten und gute Verarbeitungs- und Schaumeigenschaften aufweisen.

Die Aufgabe konnte überraschenderweise gelöst werden durch den Einsatz von Polyetheralkoholen auf Basis von aromatischen Aminen, die durch Anlagerung von Propylenoxid an aromatische Amine unter Verwendung von Aminen als Katalysatoren hergestellt wurden.

Gegenstand der Erfindung ist demzufolge ein Verfahren zur Herstellung von Polyurethanen, vorzugsweise von Polyurethan-Schaumstoffen, insbesondere von Polyurethan-Hartschaumstoffen, durch Umsetzung von
a) Polyisocyanaten mit
b) Verbindungen mit mindestens zwei mit Isocyanatgruppen reaktiven Wasserstoffatomen,
dadurch gekennzeichnet, dass die Verbindungen mit mindestens zwei mit Isocyanatgruppen reaktiven Wasserstoffatomen b) mindestens einen Polyetheralkohol b1) enthalten, der durch Umsetzung eines aromatischen Amins b1a) mit Propylenoxid unter Verwendung eines von b1a) verschiedenen Amins b1b) als Katalysator hergestellt wurde, wobei als Alkylenoxid zur Herstellung des Polyetheralkohols b1) neben Propylenoxid 0 bis 10 Gew.-% bezogen auf das Gewicht der Alkylenoxide, Ethylenoxid eingesetzt wird.

Als aromatische Amine b1a) können bei der Herstellung der Polyetheralkohole b1) prinzipiell alle bekannten aromatischen Amine mit mindestens einer, vorzugsweise mindestens zwei und besonders bevorzugt mit zwei Aminogruppen eingesetzt werden. Bei den Aminogruppen handelt es sich üblicherweise um primäre Aminogruppen.

In einer bevorzugten Ausführungsform des erfindungsgemäßen Verfahrens sind die aromatischen Amine b1a) ausgewählt aus der Gruppe, enthaltend Anilin, TDA, MDA und PMDA, besonders bevorzugt aus der Gruppe, enthaltend TDA und PMDA. Insbesondere wird TDA verwendet.

Bei der Verwendung von TDA können alle Isomere allein oder in beliebigen Gemischen miteinander eingesetzt werden. Insbesondere können 2,4-TDA, 2,6-TDA, Gemische aus 2,4-TDA und 2,6-TDA 2,3-TDA, 3,4-TDA, Gemische aus 3,4-TDA und 2,3-TDA, sowie Gemische aus allen genannten Isomeren eingesetzt werden.

2,3-TDA und 3,4-TDA werden häufig auch als ortho-TDA oder als vicinales TDA bezeichnet. Das TDA kann ausschließlich vicinales TDA sein. In einer besonders bevorzugten Ausführungsform des erfindungsgemäßen Verfahrens besteht das TDA zu mindestens 90 Gew.-%, besonders bevorzugt zu mindestens 95 Gew.-% und insbesondere zu mindestens 99 Gew.-%, jeweils bezogen auf das Gewicht des TDA, aus vicinalem TDA.

Als Alkylenoxid wird vorzugsweise ausschließlich Propylenoxid verwendet. Es kann für einzelne Anwendungen vorteilhaft sein, eine geringe Menge an Ethylenoxid mitzuverwenden. Um die oben geschilderten Nachteile zu vermeiden, sollte der Anteil an Ethylenoxid 10 Gew.-% nicht überschreiten. Vorzugsweise liegt der Gehalt an Ethylenoxid bei dieser Ausführungsform zwischen größer Null und 10 Gew.-%, besonders bevorzugt zwischen größer Null und 5 Gew.-% und insbesondere zwischen größer Null und 2 Gew.-%, jeweils bezogen auf das Gewicht der Alkylenoxide b).

Als Katalysatoren zur Herstellung der Polyetheralkohole b1) werden, wie beschrieben, Amine b1 b) eingesetzt. Es versteht sich, dass die als Katalysatoren eingesetzten Amine b1b) nicht die als Startsubstanz eingesetzten, oben näher beschriebenen aromatischen Amine b1a) sind. Unter Startsubstanz werden im Folgenden die Verbindungen verstanden, die mit Alkylenoxiden reaktive Wasserstoffatome aufweisen.

Als Amine b1b) im Sinne der vorliegenden Erfindung gelten alle Substitutionsprodukte des Ammoniaks, bei denen mindestens ein Wasserstoffatom durch Alkyl- und/oder Arylreste ersetzt ist.

In einer Ausführungsform der Erfindung sind die Amine b1b) aliphatische Amine. Die aliphatischen Amine können primäre, sekundäre oder tertiäre Aminogruppen enthalten. Bei den aliphatischen Aminen sind tertiäre Amine, wie Trialkylamine oder Dimethylalkylamine, besonders bevorzugt. Als Amine gelten auch Aminoalkohole.

In einer weiteren Ausführungsform der Erfindung ist das Amin b1b) ein von b1a) verschiedenes aromatisches Amin, beispielsweise Dimethylanilin.

In einer Ausführungsform des erfindungsgemäßen Verfahrens kann es sich bei den Aminen b1b) um aromatische heterocylische Verbindungen mit mindestens einem, vorzugsweise mindestens zwei Stickstoffatomen im Ring, handeln.

Vorzugsweise sind die als Katalysator eingesetzten Amine b1b) ausgewählt aus der Gruppe, enthaltend Trimethylamin, Triethylamin, Tripropylamin, Tributylamin, N,N'-Dimethylethanolamin, N,N'-Dimethylcyclohexylamin, Dimethylethylamin, Dimethylbutylamin, N,N'-Dimethylanilin, 4-Dimethylaminopyridin, N,N'-Dimethylbenzylamin, Pyridin, Imidazol, N-Methylimidazol, 2-Methylimidazol, 4-Methylimidazol, 5-Methylimidazol, 2-Ethyl-4-methylimidazol, 2,4-Dimethylimidazol, 1-Hydroxypropylimidazol, 2,4,5-Trimethylimidazol, 2-ethylimidazol, 2-Ethyl-4-methylimidazol, N-Phenylimidazol, 2-Phenylimidazol, 4-Phenylimidazol, Guanidin, alkylierte Guanidine, 1,1,3,3-Tetramethylguanidin, 7-Methyl-1,5,7-triazabicyclo[4.4.0]dec-5-en, 1,5-Diazobicylco[4.3.0]-non-5-en, 1,5-Diazabicylo[5.4.0]undec-7-en.

Die Amine b1b) können allein oder in beliebigen Mischungen zueinander eingesetzt werden.

In einer bevorzugten Ausführungsform der Erfindung ist der Katalysator b1b) Dimethylethanolamin.

In einer bevorzugten Ausführungsform der Erfindung ist der Katalysator b1b) ein Imidazol, besonders bevorzugt Imidazol.

Das Amin b1b) wird dabei vorzugsweise in einer Menge von 0,1-1,0 Massen % bezogen auf das Gewicht aller Einsatzkomponenten für die Herstellung des Polyetheralkohols b1) eingesetzt. Diese Menge ist besonders bevorzugt bei der Verwendung von aliphatischen Aminen.

Die heterocyclischen Verbindungen, insbesondere die Imidazole, werden vorzugsweise in einer Menge von 0,01 bis 0,5 Massen % bezogen auf das Gewicht aller Einsatzkomponenten für die Herstellung des Polyetheralkohols, eingesetzt.

Die als Katalysator zur Herstellung der Polyetheralkohole b1) eingesetzten Amine b1b) können zu Beginn der Reaktion zugegeben werden. Dabei kann der Katalysator b1b) vor der Zugabe der Alkylenoxide oder, weniger bevorzugt, gleichzeitig mit dem Dosierstart der Alkylenoxide zugegeben werden.

In einer besonders bevorzugten Ausführungsform der Erfindung kann zu Beginn der Umsetzung die Anlagerung der Alkylenoxide unkatalysiert erfolgen und der Katalysator während der Umsetzung zugegeben werden. Bevorzugt erfolgt die Zugabe des Katalysators in dieser Ausführungsform nach der Dosierung von bis zu 3,4 mol Propylenoxid pro mol aromatisches Amin a) besonders bevorzugt von bis zu 3,0 mol Propylenoxid pro mol aromatisches Amin b1a).

Die Umsetzung der Amine mit dem Alkylenoxid erfolgt nach üblichem und beispielsweise in EP 318 784 beschriebenem Verfahren. Wie beschrieben, kann der Katalysator b1b) vor der Umsetzung, gleichzeitig mit dem Dosierstart der Alkylenoxide oder während der Umsetzung zugegeben werden. Vor der Dosierung der Alkylenoxide kann die Startermischung gestrippt werden, vorzugsweise bei einem Druck von 0,01-1 bar und einer Temperatur von 25-150 °C.

Die als Startsubstanz eingesetzten aromatischen Amine b1a) können in einer bevorzugten Ausführungsform der Erfindung als einzige Startsubstanz eingesetzt werden.

In einer weiteren Ausführungsform der Erfindung können die aromatischen Amine b1a) in Kombination mit anderen Verbindungen mit mindestens zwei mit Isocyanatgruppen reaktiven Wasserstoffatomen b1c) eingesetzt werden. Bei den Verbindungen b1c) handelt es sich vorzugsweise um Alkohole oder von b1b) verschiedene Aminoalkohole mit einem Molekulargewicht von 40-400 g/mol insbesondere 60-120 g/mol und 1 bis 8, vorzugsweise 2 bis 3 Hydroxylgruppen. Die Verbindungen b1c) werden im folgenden auch als Costarter bezeichnet.

Vorzugsweise ist die Verbindung b1c) ausgewählt aus der Gruppe, enthaltend Wasser, Ethylenglykol, Diethylengykol, Propylenglykol, Dipropylenglykol, Glyzerin und Triethanolamin. Die genannnten Verbindungen können auch in Form ihrer Umsetzungsprodukte mit Alkylenoxiden mit einem Molekulargewicht von bis zu 800 g/mol eingesetzt werden.

Der Einsatz der Verbindungen b1c) erfolgt vorzugsweise in einer Menge von 0,1 bis 20 Gew.-%, bezogen auf das Gewicht der Starterverbindungen.

Die Anlagerung der Alkylenoxide wird bevorzugt bei einer Temperatur zwischen 90 und 150 °C und einem Druck zwischen 0,1 bis 8 bar durchgeführt. An die Dosierung der Alkylenoxide schließt sich üblicherweise eine Nachreaktionsphase zur möglichst vollständigen Umsetzung der Alkylenoxide an. Der so erhaltene Rohpolyetheralkohol wird durch Destillation, vorzugsweise unter Vakuum, von nicht umgesetztem Alkylenoxid und leicht flüchtigen Verbindungen befreit.

Die nach dem erfindungsgemäßen Verfahren hergestellten Polyetheralkole weisen vorzugsweise eine Hydroxylzahl im Bereich zwischen 200 und 800 mg KOH/g, besonders bevorzugt 350 bis 500 mg KOH/g und insbesondere 350 bis 450 mg KOH/g auf. Auf Grund ihrer niedrigen Viskosität weisen die unter Verwendung der Polyetheralkole b1) hergestellten Polyurethansysteme eine gute Verarbeitbarkeit, insbesondere eine gute Fließfähigkeit, auf.

Sie sind gut mit Treibmitteln, insbesondere mit Treibmitteln auf Basis von Kohlenwasserstoffen, verträglich und weisen eine gute Lagerstabilität auf. Auch die Verträglichkeit mit der Isocyanat-Komponente wird erhöht. Überraschenderweise war auch die Entformzeit der Schaumstoffe kürzer.

Die Umsetzung der Amine, insbesondere des TDA, mit den Alkylenoxiden ist quantitativ, es findet sich in den Polyetheralkoholen b1) praktisch kein freies Amin mehr.

Zu den für das erfindungsgemäße Verfahren eingesetzten Ausgangsstoffen ist im Einzelnen folgendes zu sagen:
Als organische Polyisocyanate a) kommen vorzugsweise aromatische mehrwertige Isocyanate in Betracht.

Im einzelnen seien beispielhaft genannt: 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten und bei der Herstellung von Polyurethan-Hartschaumstoffen insbesondere Mischungen aus 4,4'-, 2,4'- und 2,2'-Diphenylmethan-diisocyanaten und Polyphenyl-polymethylen-polyisocyanaten (Roh-MDI).

Die Polyetheralkohole b1) werden üblicherweise im Gemisch mit anderen Verbindungen mit mindestens zwei mit Isocyanatgruppen reaktiven Wasserstoffatomen eingesetzt.

Als Verbindungen mit mindestens zwei gegenüber Isocyanat reaktiven Wasserstoffatomen, die gemeinsam mit den erfindungsgemäß eingesetzten Polyetheralkoholen bi) verwendet werden können, kommen insbesondere Polyetheralkohole und/oder Polyesteralkohole mit OH-Zahlen im Bereich von 100 bis 1200 mg KOH/g zum Einsatz.

Die gemeinsam mit den Polyetheralkoholen b1) verwendeten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den erfindungsgemäß eingesetzten Polyetheralkoholen bi) verwendeten Polyetheralkohole haben zumeist eine Funktionalität zwischen 2 und 8, insbesondere 3 bis 8.

Insbesondere kommen neben den Polyetheralkoholen b1) Polyetheralkohole, die nach bekannten Verfahren, beispielsweise durch anionische Polymerisation von Alkylenoxiden in Gegenwart von Katalysatoren, vorzugsweise Alkalihydroxiden oder Aminen, hergestellt werden, zum Einsatz.

Als Alkylenoxide werden zumeist Ethylenoxid, Propylenoxid und/oder Butylenoxid, vorzugsweise Ethylenoxid und/oder Propylenoxid und insbesondere reines 1,2-Propylenoxid eingesetzt.

Als Startmoleküle kommen insbesondere Verbindungen mit mindestens 2, vorzugsweise 3 bis 8 Hydroxylgruppen oder mit mindestens zwei primären Aminogruppen im Molekül zum Einsatz.

Als Startmoleküle mit mindestens 2, vorzugsweise 3 bis 8 Hydroxylgruppen im Molekül werden vorzugsweise Trimethylolpropan, Glycerin, Pentaerythrit, Rizinusöl, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt. Die Startsubstanzen können einzeln oder in Form von Gemischen eingesetzt werden.

Die Polyetheralkohole besitzen eine Funktionalität von vorzugsweise 3 bis 8 und Hydroxylzahlen von vorzugsweise 100 mg KOH/g bis 1200 mg KOH/g und insbesondere 120 mg KOH/g bis 570 mg KOH/g.

Durch den Einsatz von difunktionellen Polyolen, beispielsweise Polyethylenglykolen und/oder Polypropylenglykolen, mit einem Molgewicht im Bereich zwischen 500 bis 1500 in der Polyolkomponente kann die Viskosität der Polyolkomponente angepasst werden.

Der Anteil der Polyetheralkohole b1) in der Komponente b) beträgt vorzugsweise mindestens 5 Gew.-%, besonders bevorzugt mindestens 10 Gew.-%, insbesondere mindestens 20 Gew.-%, und höchstens 60 Gew.-%, vorzugsweise höchstens 40 Gew.-%, und insbesondere höchstens 30 Gew.-%.

In einer bevorzugten Ausführungsform des erfindungsgemäßen Verfahrens enthält die Komponente b) neben dem Polyetheralkohol b1) noch einen Polyetheralkohol b2) mit einer Hydroxylzahl im Bereich zwischen 350 und 600 mg KOH/g und einer Funktionalität im Bereich zwischen 4 und 8. Der Polyetheralkohol b2) wird vorzugsweise durch Anlagerung von Propylenoxid an eine mindestens einen Zucker enthaltende Startsubstanz hergestellt. Als Zucker wird bevorzugt Saccharose und/oder Sorbit, bevorzugt Saccharose, eingesetzt. Üblicherweise enthält die Startsubstanz noch mindestens einen bei Raumtemperatur flüssigen Alkohol, vorzugsweise ausgewählt aus der Gruppe, enthaltend Ethylenglykol, Propylenglykol und Glyzerin, insbesondere Glyzerin. Die Herstellung des Polyetheralkohols b2) erfolgt üblicherweise in Anwesenheit eines basischen Katalysators, zumeist ein Alkalihydroxid, oder ein Amin. In einer bevorzugten Ausführungsform der Erfindung wird als Katalysator eine Amin eingesetzt, wie es oben in der Gruppe b1b) beschrieben ist. Wenn ein Polyetheralkohol b2) eingesetzt wird, ist er bevorzugt in eine Menge von 50-60 Gew.-%, bezogen auf die Komponente b) anwesend.

In einer weiteren bevorzugten Ausführungsform des erfindungsgemäßen Verfahrens enthält die Komponente b) einen Polyetheralkohol b3) mit einer Funktionalität von 2 bis 3 und einer Hydroxylzahl im Bereich zwischen 100 und 300 mg KOH/g. Der Polyetheralkohol b3) wird vorzugsweise durch Anlagerung von Alkylenoxiden an Diole, wie Ethylenglykol, Diethylenglykol, Propylenglykol, Dipropylenglykol, und oder an Glyzerin, Trimethylolpropan, oder TDA hergestellt. Wenn ein Polyetheralkohol b3) verwendet wird, ist er vorzugsweise in einer Menge von 10 bis 30 Gew.-%, bezogen auf die Komponente b), vorhanden.

In einer besonders bevorzugten Ausführungsform der Erfindung enthält die Komponente b) neben dem Polyetheralkohol b1) mindestens einen Polyetheralkohol b2) und mindestens einen Polyetheralkohol b3) in den oben angegebenen Mengen.

In einer weiteren bevorzugten Ausführungsform des erfindungsgemäßen Verfahrens enthält die Komponente b) mindestens einen Polyesteralkohol b4). Dieser hat vorzugsweise eine Hydroxylzahl im Bereich zwischen 200 und 350 mg KOH/g und eine Funktionalität von 2 bis 3. Vorzugsweise wird der Polyesteralkohol b4) unter Verwendung von aromatischen Carbonsäuren, wie Phthalsäure, Terephthalsäure, oder Phthalsäureanhydrid hergestellt. In einer Ausführungsform des erfindungsgemäßen Verfahrens wird der Polyesteralkohol b4) unter Verwendung von Polyalkylenterephthalaten hergestellt. Der Polyesteralkohol b4) wird vorzugsweise in einer Menge von 20-40 Gew.-%, bezogen auf die Komponente b), eingesetzt.

Üblicherweise enthält die Komponente b) neben den Polyetheralkohol b1) die Polyetheralkohole b2) und/oder b3) oder mindestens einen Polyesteralkohol b4).

Zu den Verbindungen mit mindestens zwei gegenüber Isocyanat reaktiven Wasserstoffatomen b) gehören auch die gegebenenfalls mit verwendeten Kettenverlängerer und Vernetzer. Die Polyurethan-Hartschaumstoffe können ohne oder unter Mitverwendüng von Kettenverlängerungs- und/oder Vernetzungsmitteln hergestellt werden. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

In einer Ausführungsform der Erfindung wird Propylencarbonat, insbesondere in einer Menge von 0 bis 3 Gewichtsteilen, bezogen auf die Komponente b), eingesetzt. Die Beschreibung dieser Klasse von Verbindungen findet sich beispielsweise in WO 9502620. Dadurch kann unter anderem die Viskosität der Komponente b) eingestellt werden.

Die Herstellung der Polyurethan-Schaumstoffe erfolgt üblicherweise in Anwesenheit von Treibmitteln c). hierbei unterscheidet man zwischen chemischen Treibmitteln, die mit mindestens einer der Ausgangskomponenten, vorzugsweise dem Polyisocyanat a), unter Freisetzung des Treibgases reagieren, und physikalischen Treibmitteln, die gegenüber den Ausgangskomponenten der Polyurethanherstellung inert sind.

Als chemisches Treibmittel kann vorzugsweise Wasser verwendet werden, das mit Isocyanatgruppen unter Abspaltung von Kohlendioxid reagiert. Ein weiteres häufig eingesetztes physikalisches Treibmittel ist Ameisensäure.

In Kombination mit oder an Stelle von chemischen Treibmitteln können auch physikalische Treibmittel eingesetzt werden. Dabei handelt es sich, wie beschrieben, um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die physikalischen Treibmittel werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

In einer bevorzugten Ausführungsform der Erfindung sind die Treibmittel Kohlenwasserstoffe. Besonders bevorzugt werden die Treibmittel ausgewählt aus der Gruppe, enthaltend Alkane und/oder Cycloalkane mit mindestens 4 Kohlenstoffatomen. Insbesondere werden Pentane, bevorzugt iso-Pentan und Cyclopentan, eingesetzt. Bei der Verwendung der Hartschaumstoffe als Isolierung in Kühlgeräten ist Cyclopentan bevorzugt. Die Kohlenwasserstoffe können im Gemisch mit Wasser eingesetzt werden.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und 1,1,1,2,3,3,3-Heptafluorpropan, sowie Perfluoralkane, wie C3F8, C4F10, C5F12, C6F14, und C7F16. besonders bevorzugt sind Pentane, insbesondere Cyclopentan. Die genannten physikalischen Treibmittel können allein oder in beliebigen Kombinationen untereinander eingesetzt werden.

Weiterhin können als Treibmittel Hydrofluorolefine, wie 1,3,3,3-Tetrafluorpropen, oder Hydrochlorfluorolefine, wie 1,Chlor-3,3,3-trifluorpropen, eingesetzt werden. Derartige Treibmittel sind beispielsweise in WO 2009/048826 beschrieben.

Bei Einsatz von Kohlenwasserstoffen als Treibmittel werden bevorzugt Polyetheralkohole b1) b2) und gegebenenfalls b3) in der Komponente b) eingesetzt.

Bei Einsatz von Polyesteralkoholen b4) in der Komponente b) werden vorzugsweise halogenierte Treibmittel eingesetzt.

Die Herstellung der Polyurethane kann, falls erforderlich, in Anwesenheit von Katalysatoren, Flammschutzmitteln sowie üblichen Hilfs- und/oder Zusatzstoffen durchgeführt werden.

Als Katalysatoren werden insbesondere Verbindungen eingesetzt, welche die Reaktion der Isocyanatgruppen mit den mit Isocyanatgruppen reaktiven Gruppen stark beschleunigen.

Solche Katalysatoren sind stark basische Amine, wie z. B. sekundäre aliphatische Amine, Imidazole, Amidine, sowie Alkanolamine oder organische Metallverbindungen, insbesondere organische Zinnverbindungen.

Wenn in den Polyurethan-Hartschaum auch Isocyanuratgruppen eingebaut werden sollen, werden dafür spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Das erfindungsgemäße Verfahren kann, falls erforderlich, in Anwesenheit von Flammschutzmitteln sowie üblichen Hilfs- und/oder Zusatzstoffen durchgeführt werden.

Als Flammschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen.

Typischer Vertreter dieser Gruppe von Flammschutzmitteln sind Triethylphosphat, Diphenylkresylphosphat, Tris-(Chlorpropyl)-phosphat sowie Diethylethanphosphonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Weitere Angaben zu eingesetzten Ausgangsverbindungen finden sich beispielsweise im Kunststoffhandbuch, Band 7 "Polyurethane", herausgegeben von Günter Oertel, Carl-Hanser-Verlag München, 3. Auflage, 1993.

Die Erfindung soll an den nachfolgenden Beispielen näher erläutert werden.

### Methoden:

### Viskositätsbestimmung:

Die Viskosität der Polyole wurde, wenn nicht anders angegeben, bei 25 °C gemäß DIN EN ISO 3219 mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bestimmt

### Messung der Hydroxylzahl:

Die Hydroxylzahlen wurden nach der DIN 53240 bestimmt.

### Wärmeleitfähigkeit:

Die Wärmeleitfähigkeit wurde mit einem Wärmestrommessplattengerät Hesto A50 bei einer Mitteltemperatur von 23 °C bestimmt. Zur Herstellung der Prüfkörper wurde das Polyurethan-Reaktionsgemisch in eine Form der Maße 2000 x 200 x 50 mm eingebracht (15 % Überfüllung) und nach 5 Min. entformt. Nach Lagerung für 24 Stunden bei Normklima wurden mehrere Schaumquader (Position 10, 900 und 1700 mm bezogen auf Lanzenanfang) der Dimension 200 x 200 x 50 mm aus der Mitte geschnitten. Anschließend wurde die Ober- und Unterseite entfernt, so dass Prüfkörper der Dimension 200 x 200 x 30 mm erhalten wurden.

### Druckfestigkeit:

Die Druckfestigkeit wurde bestimmt nach DIN 53421 / DIN EN ISO 604.

### Bestimmung der Pentanlöslichkeit:

Zur Beurteilung der Pentanlöslichkeit wird die Polyolkomponente mit der in den Beispielen angegebenen Menge an Treibmittel vermischt (Vollrath-Rührer, 1500 Umdrehungen/Min., 2Min. Rührzeit) in ein Schraubglas gegeben und verschlossen. Nach vollständigem Entweichen von Gasbläschen wird die Klarheit der Probe zunächst bei Raumtemperatur geprüft. Ist die Probe klar, wird sie anschließend im Wasserbad in Schritten von 1 °C abgekühlt und 30 Min. nach Erreichen der eingestellten Temperatur auf Klarheit geprüft.

### Bestimmung des Entformungsverhaltens:

Die Bestimmung des Entformungsverhaltens erfolgte durch Messung des Nachtriebes von Schaumkörpern, die mit einer Kastenform der Dimension 700 x 400 x 90 mm in Abhängigkeit der Entformzeit und der Überfüllung (OP = Overpacking, entspricht dem Verhältnis der Gesamtrohdichte/Mindestfülldichte) hergestellt wurden. Der Nachtrieb wurde durch Höhenmessung der Schaumquader nach 24 h ermittelt.

### Herstellung der Polyetheralkohole:

### Polyol 1:

Ein 30 l Druckreaktor mit Rührwerk, Mantelheizung und Kühlung, Dosiereinrichtungen für feste und flüssige Substanzen und Alkylenoxide sowie Einrichtungen zur Stickstoffinertisierung und einem Vakuumsystem wurde auf 80 °C aufgeheizt und mehrmals inertisiert. 5,47 kg vic-Toluylendiamin wurden in den Reaktor eingefüllt und der Rührer wurde in Betrieb genommen. Anschließend wurde die Temperatur auf 138 °C erhöht und ein Gemisch aus 3,61 kg Ethylenoxid und 2,77 kg Propylenoxid (2,9 mol Alkylenoxid pro mol TDA) zudosiert. Nach einer Abreaktion von 2 h wurde die Temperatur auf 100 °C abgesenkt und 88 g 48%ige wässrige KOH zugegeben. Die Temperatur wurde auf 138 °C erhöht und das Zwischenprodukt mit weiteren 12,26 kg Propylenoxid umgesetzt. Die Nachreaktion lief für 2 Stunden bei 138 °C. Es wurde 20 Minuten mit Stickstoff gestrippt. Anschließend wurden 2,5 % Wasser zugegeben und mit Phosphorsäure neutralisiert. Das Wasser wurde im Vakuum abgestrippt und das Produkt bei 80 °C filtriert. Es wurden 22,9 kg Produkt mit folgenden Parametern erhalten:

| | |
|---|---|
| Hydroxylzahl | 396 mg KOH/g |
| Viskosität (25 °C) | 13772 m Pas |

### Polyol 2:

Der in Beispiel 1 beschriebene Reaktor wurde auf 80 °C aufgeheizt und mehrmals inertisiert. 5,65 kg vic-Toluylendiamin wurden in den Reaktor eingefüllt und der Rührer in Betrieb genommen. Anschließend wurde die Temperatur auf 138 °C erhöht und 7,50 kg Propylenoxid (2,8 mol Propylenoxid pro mol TDA) zudosiert. Nach einer Abreaktion von 2 h wurde die Temperatur auf 100 °C abgesenkt und 91 g 48%ige wässrige KOH zugegeben. Die Temperatur wurde auf 138 °C erhöht und das Zwischenprodukt mit weiteren 11,74 kg Propylenoxid umgesetzt. Die Nachreaktion lief für 2 Stunden bei 138 °C. Es wurde 20 Minuten mit Stickstoff gestrippt. Anschließend wurden 2,5 % Wasser zugegeben und mit Phosphorsäure neutralisiert. Das Wasser wurde im Vakuum abgestrippt und das Produkt wurde bei 80 °C filtriert. Es wurden 22,7 kg Produkt mit folgenden Parametern erhalten:

| | |
|---|---|
| Hydroxylzahl | 371 mg KOH/g |
| Viskosität (25 °C) | 42359 mPas |

### Polyol 3:

Der in Beispiel 1 beschriebene Reaktor wurde auf 80 °C aufgeheizt und mehrmals inertisiert. 6,2 kg vic-Toluylendiamin wurde in den Reaktor eingefüllt und der Rührer in Betrieb genommen. Anschließend wurde die Temperatur auf 138 °C erhöht und 8,26 kg Propylenoxid (2,8 mol Propylenoxid pro mol TDA) zudosiert. Nach einer Abreaktion von 2 h wurde die Temperatur auf 100 °C abgesenkt und 220 g Dimethylethanolamin zugegeben. Die Temperatur wurde auf 95 °C erhöht und das Zwischenprodukt wurde mit weiteren 12,07 kg Propylenoxid umgesetzt. Die Nachreaktion lief für 2 Stunden bei 95 °C. Es wurde 20 Minuten mit Stickstoff gestrippt. Es wurden 23,6 kg Produkt mit folgenden Parametern erhalten:

| | |
|---|---|
| Hydroxylzahl | 404 mg KOH/g |
| Viskosität (25 °C) | 14600 mPas |

**Tabelle 1: Vergleich der Viskositäten von Polyolen auf Basis von TDA**

| | **OH-Zahl** | **Viskosität** |
|---|---|---|
| | [mg KOH/g] | [mPas@25°C] |
| Polyol 1 | 396 | 13772 |
| Polyol 2 | 371 | 42359 |
| Polyol 3 | 404 | 14600 |

Ein Vergleich der erhaltenen Viskositäten der Polyole zeigt, dass das erfindungsgemäße Polyol 3 trotz höherer OH-Zahl eine deutlich geringere Viskosität aufweist als das nicht erfindungsgemäße Polyol 2, welches mittels KOH-Katalyse hergestellt wurde. Die Viskosität ist in der gleichen Größenordnung wie sie für das nicht erfindungsgemäße Polyol 1 mit entsprechenden Anteilen an Ethylenoxid-Einheiten erhalten wurde.

### Herstellung der Polyurethan-Hartschaumstoffe:

### Angaben zu Einsatzstoffen:

| | |
|---|---|
| Polyol 1: | Aus Beispiel 1 |
| Polyol 2: | Aus Beispiel 2 |
| Polyol 3: | Aus Beispiel 3 |
| Polyol 4: | Polyetherol auf Basis Saccharose, Glycerin und Propylenoxid, KOH katalysiert, Funktionalität = 5,1, Hydroxylzahl = 450 mg KOH/g |
| Polyol 5: | Polyetherol auf Basis vic-TDA, Ethylenoxid und Propylenoxid, Hydroxylzahl = 160 mg KOH/g, KOH katalysiert |
| Polyol 6: | Dipropylenglykol |
| Stabilisator: | Tegostab B 8491 (Silikonstabilisator von Evonik) |
| Katalysator 1: | Dimethylcyclohexylamin (DMCHA) |
| Katalysator 2: | Pentamethyldiethylentriamin (PMDETA) |
| Katalysator 3: | Lupragen N600 (BASF) |
| Isocyanat: | Polymer-MDI (Lupranat® M20) |

### Maschinenverschäumung:

Aus den angegebenen Rohstoffen wurde eine Polyolkomponente hergestellt. Mittels eines Hochdruck-Puromaten® PU 30/80 IQ (Elastogran GmbH) mit einer Austragsmenge von 250 g/sek. wurde die Polyolkomponente mit der erforderlichen Menge des angegebenen Isocyanats vermischt, so dass ein Isocyanat-Index von 110 erreicht wurde. Die Reaktionsmischung wurde in temperierte Formwerkzeuge der Abmessungen 2000 mm x 200 mm x 50 mm bzw. 400 mm x 700 mm x 90 mm eingespritzt und dort aufschäumen lassen. Die Überfüllung betrug 15 %.

Die eingesetzten Ausgangsstoffe, die Herstellungseigenschaften sowie die mechanischen Eigenschaften der Schaumstoffe sind in der Tabelle 2 beschrieben.

**Tabelle 2: Übersicht Maschinenversuche (V = Vergleichsversuch)**

| | **1 (V)** | **2** |
|---|---|---|
| **Polyol-Komponente [pbw]** | | |
| Polyol 1 | 22 | - |
| Polyol 3 | - | 22 |
| Polyol 4 | 54 | 54 |
| Polyol 5 | 15 | 15 |
| Polyol 6 | 2 | 2 |
| Stabilisator | 2,8 | 2,8 |
| Katalysator 1 | 0,5 | 0,5 |
| Katalysator 2 | 0,8 | 0,8 |
| Katalysator 3 | 0,4 | 0,4 |
| Wasser | 2,6 | 2,6 |
| Cyclopentan | 13 | 13 |

| **Isocyanat-Komponente [pbw]** | | |
|---|---|---|
| Lupranat® M 20 | 156 | 156 |
| | | |
| Startzeit [s] | 5 | 5 |
| Abbindezeit [s] | 40 | 41 |
| Freies Raumgewicht [g/L] | 23 | 23 |
| Trübungspunkt Polyol-Komponente [°C] | 10 | 5 |
| Viskosität Polyol-Komponente [mPas@25°C] | 6600 | 7400 |
| Fließfaktor | 1,3 | 1,3 |
| Lambda [mW/m*K] | 19,2 | 18,8 |
| Druckfestigkeit [N/mm²] | 0,17 | 0,17 |
| Nachexpansion [%] | | |
| 3 Min. | 4,9 | 3,8 |
| 4 Min. | 3,4 | 2,4 |
| 5 Min. | 2,3 | 1,5 |
| 7 Min. | 1,0 | 0,3 |
| Gesamtrohdichte [g/L] | 35,2 | 35,9 |
| Kernrohdichte [g/L] | 31,7 | 32 |

Beispiel 1 stellt ein Vergleichsbeispiel dar. Das System in Beispiel 2 (erfindungsgemäß) mit einem Polyetheralkohol auf Basis von TDA und Propylenoxid unter Verwendung von Dimethylethanolamin als Katalysator weist deutlich verbesserte Entformungseigenschaften auf, die sich in einer niedrigerer Nachexpansion äußert. Des Weiteren ergibt sich eine verbesserte Verträglichkeit mit dem Treibmittel, die sich in einer niedrigeren Trübungstemperatur äußert.

## Patentansprüche

1. Verfahren zur Herstellung von Polyurethanen durch Umsetzung von
a) Polyisocyanaten mit
b) Verbindungen mit mindestens zwei mit Isocyanatgruppen reaktiven Wasserstoffatomen,
**dadurch gekennzeichnet, dass** die Verbindungen mit mindestens zwei mit Isocyanatgruppen reaktiven Wasserstoffatomen b) mindestens einen Polyetheralkohol b1) enthalten, der durch Umsetzung eines aromatischen Amins b1a) mit Propylenoxid unter Verwendung eines von b1a) verschiedenen Amins b1b) als Katalysator hergestellt wurde wobei als Alkylenoxid zur Herstellung des Polyetheralkohols b1) neben Propylenoxid 0 bis 10 Gew.-%, bezogen auf das Gewicht der Alkylenoxide, Ethylenoxid eingesetzt wird.

2. Verfahren nach Anspruch 1, **dadurch gekennzeichnet, dass** das aromatische Amin b1a) ausgewählt ist aus der Gruppe, enthaltend Anilin, TDA, MDA und PMDA.

3. Verfahren nach Anspruch 1, **dadurch gekennzeichnet, dass** das aromatische Amin b1a) ausgewählt ist aus der Gruppe, enthaltend TDA und PMDA.

4. Verfahren nach Anspruch 1, **dadurch gekennzeichnet, dass** das aromatische Amin b1a) TDA ist.

5. Verfahren nach Anspruch 1, **dadurch gekennzeichnet, dass** das aromatische Amin b1a) zu mindestens 90 Gew.-%, bezogen auf das Gewicht des TDA, ortho-TDA ist.

6. Verfahren nach Anspruch 1, **dadurch gekennzeichnet, dass** das Amin b1b) ausgewählt ist aus der Gruppe, enthaltend Trimethylamin, Triethylamin, Tripropylamin, Tributylamin, N,N'-Dimethylethanolamin, N,N'-Dimethylcyclohexylamin, Dimethylethylamin, Dimethylbutylamin, N,N'-Dimethylanilin, 4-Dimethylaminopyridin, N,N'-Dimethylbenzylamin, Pyridin, Imidazol, N-Methylimidazol, 2-Methylimidazol, 4-Methylimidazol, 5-Methylimidazol, 2-Ethyl-4-methylimidazol, 2,4-Dimethylimidazol, 1-Hydroxypropylimidazol, 2,4,5-Trimethylimidazol, 2-ethylimidazol, 2-Ethyl-4-methylimidazol, N-Phenylimidazol, 2-Phenylimidazol, 4-Phenylimidazol, Guanidin, alkylierte Guanidine, 1,1,3,3-Tetramethylguanidin, 7-Methyl-1,5,7-triazabicyclo[4.4.0]dec-5-en, 1,5-Diazobicylco[4.3.0]-non-5-en, 1,5-Diazabicylo[5.4.0]undec-7-en.

7. Verfahren nach Anspruch 1, **dadurch gekennzeichnet, dass** das Amin b1b) Dimethylethanolamin ist.

8. Verfahren nach Anspruch 1, **dadurch gekennzeichnet, dass** das Amin b1b) ein Imidazol ist.

9. Verfahren nach Anspruch 1, **dadurch gekennzeichnet, dass** das Amin b1b) in einer Menge von 0,1-1,0 Massen-% bezogen auf das Gewicht aller Einsatzkomponenten für die Herstellung des Polyetheralkohols b1), eingesetzt wird.

10. Verfahren nach Anspruch 1, **dadurch gekennzeichnet, dass** die Polyetheralkohole b1) eine Hydroxylzahl im Bereich zwischen 200 und 800 mg KOH/g aufweisen.

11. Verfahren nach Anspruch 1, **dadurch gekennzeichnet, dass** die Komponente b) neben dem Polyetheralkohol b1) mindestens eine weitere Verbindung mit mindestens zwei mit Isocyanatgruppen reaktiven Wasserstoffatomen enthält.

12. Verfahren nach Anspruch 1, **dadurch gekennzeichnet, dass** die Komponente b) neben dem Polyetheralkohol b1) mindestens einen Polyetheralkohol b2) mit einer Hydroxylzahl im Bereich zwischen 350 und 600 mg KOH/g und einer Funktionalität im Bereich zwischen 4 und 8 enthält.

13. Verfahren nach Anspruch 1, **dadurch gekennzeichnet, dass** die Komponente b) neben dem Polyetheralkohol b1) mindestens einen Polyetheralkohol b3) mit einer Funktionalität von 2 bis 3 und einer Hydroxylzahl im Bereich zwischen 100 und 300 mg KOH/g enthält.

14. Verfahren nach Anspruch 1, **dadurch gekennzeichnet, dass** die Komponente b) neben dem Polyetheralkohol b1) mindestens einen Polyesteralkohol b4) mit einer Hydroxylzahl im Bereich zwischen 200 und 350 mg KOH/g und eine Funktionalität von 2 bis 3 enthält.

15. Verfahren nach Anspruch 1, **dadurch gekennzeichnet, dass** die Umsetzung in Anwesenheit von Treibmitteln c) erfolgt.

16. Verfahren nach Anspruch 1, **dadurch gekennzeichnet, dass** als Treibmittel c) Kohlenwasserstoffe eingesetzt werden.

## Claims

1. A process for producing polyurethanes by reacting
a) polyisocyanates with
b) compounds having at least two hydrogen atoms which are reactive toward isocyanate groups,
wherein the compounds b) having at least two hydrogen atoms which are reactive toward isocyanate groups comprise at least one polyether alcohol b1) which has been prepared by reaction of an aromatic amine b1a) with propylene oxide using an amine b1b) which is different from b1a) as catalyst, where from 0 to 10%, based on the weight of the alkylene oxides, of ethylene oxide is used in addition to propylene oxide as alkylene oxide for preparing the polyether alcohol b1).

2. The process according to claim 1, wherein the aromatic amine b1a) is selected from the group consisting of aniline, TDA, MDA and PMDA.

3. The process according to claim 1, wherein the aromatic amine b1a) is selected from the group consisting of TDA and PMDA.

4. The process according to claim 1, wherein the aromatic amine b1a) is TDA.

5. The process according to claim 1, wherein the aromatic amine b1a) comprises at least 90% by weight, based on the weight of the TDA, of ortho TDA.

6. The process according to claim 1, wherein the amine b1b) is selected from the group consisting of trimethylamine, triethylamine, tripropylamine, tributylamine, N,N'-dimethylethanolamine, N,N'-dimethylcyclohexylamine, dimethylethylamine, dimethylbutylamine, N,N'-dimethylaniline, 4-dimethylaminopyridine, N,N'-dimethylbenzylamine, pyridine, imidazole, N-methylimidazole, 2-methylimidazole, 4-methylimidazole, 5-methylimidazole, 2-ethyl-4-methylimidazole, 2,4-dimethylimidazole, 1-hydroxypropylimidazole, 2,4,5-trimethylimidazole, 2-ethylimidazole, 2-ethyl-4-methylimidazole, N-phenylimidazole, 2-phenylimidazole, 4-phenylimidazole, guanidine, alkylated guanidines, 1,1,3,3-tetramethylguanidine, 7-methyl-1,5,7-triazabicyclo[4.4.0]dec-5-ene, 1,5-diazabicyclo[4.3.0]-non-5-ene, 1,5-diazabicyclo[5.4.0]undec-7-ene.

7. The process according to claim 1, wherein the amine b1b) is dimethylethanolamine.

8. The process according to claim 1, wherein the amine b1b) is an imidazole.

9. The process according to claim 1, wherein the amine b1b) is used in an amount of 0.1-1.0% by mass based on the weight of all starting components for the preparation of the polyether alcohol b1).

10. The process according to claim 1, wherein the polyether alcohols b1) have a hydroxyl number in the range from 200 to 800 mg KOH/g.

11. The process according to claim 1, wherein the component b) comprises at least one further compound having at least two hydrogen atoms which are reactive toward isocyanate groups in addition to the polyether alcohol b1).

12. The process according to claim 1, wherein the component b) comprises at least one polyether alcohol b2) having a hydroxyl number in the range from 350 to 600 mg KOH/g and a functionality in the range from 4 to 8 in addition to the polyether alcohol b1).

13. The process according to claim 1, wherein the component b) comprises at least one polyether alcohol b3) having a functionality of from 2 to 3 and a hydroxyl number in the range from 100 to 300 mg KOH/g in addition to the polyether alcohol b1).

14. The process according to claim 1, wherein the component b) comprises at least one polyester alcohol b4 having a hydroxyl number in the range from 200 to 350 mg KOH/g and a functionality of from 2 to 3 in addition to the polyether alcohol b1).

15. The process according to claim 1, wherein the reaction is carried out in the presence of blowing agents c).

16. The process according to claim 1, wherein hydrocarbons are used as blowing agents c).

## Revendications

1. Procédé pour la production de polyuréthanes par mise en réaction de
a) polyisocyanates avec
b) des composés comportant au moins deux atomes d'hydrogène réactifs avec des groupes isocyanate,
**caractérisé en ce que** les composés b) comportant au moins deux atomes d'hydrogène réactifs avec des groupes isocyanate comprennent au moins un polyétheralcool b1) qui a été obtenu par mise en réaction d'une amine aromatique b1a) avec de l'oxyde de propylène avec utilisation, en tant que catalyseur, d'une amine aromatique b1b) différente de b1a), en utilisant comme oxyde d'alkylène pour la préparation du polyétheralcool b1), en plus d'oxyde de propylène, 0 à 10 % en poids, par rapport au poids des oxydes d'alkylène, d'oxyde d'éthylène.

2. Procédé selon la revendication 1, **caractérisé en ce que** l'amine aromatique b1a) est choisie dans le groupe contenant l'aniline, la TDA, la MDA et la PMDA.

3. Procédé selon la revendication 1, **caractérisé en ce que** l'amine aromatique b1a) est choisie dans le groupe contenant la TDA et la PMDA.

4. Procédé selon la revendication 1, **caractérisé en ce que** l'amine aromatique b1a) est la TDA.

5. Procédé selon la revendication 1, **caractérisé en ce que** l'amine aromatique b1a) consiste à raison d'au moins 90 % en poids, par rapport au poids de la TDA, en ortho-TDA.

6. Procédé selon la revendication 1, **caractérisé en ce que** l'amine b1b) est choisie dans le groupe contenant la triméthylamine, la triéthylamine, la tripropylamine, la tributylamine, la N,N'-diméthyl-éthanolamine, la N,N'-diméthylcyclohexylamine, la diméthyléthylamine, la diméthylbutylamine, la N,N'-diméthylaniline, la 4-diméthylaminopyridine, la N,N'-diméthylbenzylamine, la pyridine, l'imidazole, le N-méthylimidazole, le 2-méthylimidazole, le 4-méthylimidazole, le 5-méthylimidazole, le 2-éthyl-4-méthylimidazole, le 2,4-diméthylimidazole, le 1-hydroxypropylimidazole, le 2,4,5-triméthylimidazole, le 2-éthylimidazole, le 2-éthyl-4-méthylimidazole, le N-phénylimidazole, le 2-phénylimidazole, le 4-phénylimidazole, la guanidine, des guanidines alkylées, la 1,1,3,3-tétraméthylguanidine, le 7-méthyl-1,5,7-triazabicyclo[4.4.0]déc-5-ène, le 1,5-diazabicyclo[4.3.0]-non-5-ène, le 1,5-diazabicyclo[5.4.0]undéc-7-ène.

7. Procédé selon la revendication 1, **caractérisé en ce que** l'amine b1b) est la diméthyléthanolamine.

8. Procédé selon la revendication 1, **caractérisé en ce que** l'amine b1b) est un imidazole.

9. Procédé selon la revendication 1, **caractérisé en ce qu'**on utilise l'amine b1b) en une quantité de 0,1-1,0 % en masse, par rapport au poids de tous les composants utilisés pour la préparation du polyétheralcool b1).

10. Procédé selon la revendication 1, **caractérisé en ce que** les polyétheralcools b1) présentent un indice d'hydroxyle dans la plage comprise entre 200 et 800 mg de KOH/g.

11. Procédé selon la revendication 1, **caractérisé en ce que** le composant b) contient en plus du polyétheralcool b1) au moins un autre composé comportant au moins deux atomes d'hydrogène réactifs avec des groupes isocyanate.

12. Procédé selon la revendication 1, **caractérisé en ce que** le composant b) contient en plus du polyétheralcool b1) au moins un polyétheralcool b2) ayant un indice d'hydroxyle dans la plage comprise entre 350 et 600 mg de KOH/g et une fonctionnalité dans la plage comprise entre 4 et 8.

13. Procédé selon la revendication 1, **caractérisé en ce que** le composant b) contient en plus du polyétheralcool b1) au moins un polyétheralcool b3) ayant une fonctionnalité de 2 à 3 et un indice d'hydroxyle dans la plage comprise entre 100 et 300 mg de KOH/g.

14. Procédé selon la revendication 1, **caractérisé en ce que** le composant b) contient en plus du polyétheralcool b1) au moins un polyesteralcool b4) ayant un indice d'hydroxyle dans la plage comprise entre 200 et 350 mg de KOH/g et une fonctionnalité de 2 à 3.

15. Procédé selon la revendication 1, **caractérisé en ce que** la réaction s'effectue en présence d'agents porogènes c).

16. Procédé selon la revendication 1, **caractérisé en ce qu'**on utilise comme agents porogènes c) des hydrocarbures.
